# EUROPÄISCHE PATENTANMELDUNG

(11) **EP 0 980 173 A2**
(43) Veröffentlichungstag der Anmeldung: **16.02.2000**
(21) Anmeldenummer: 99113879.3
(22) Anmeldetag: 16.07.1999
(51) Int. Cl.: H04M 1/02

(54) **Türanlage, insbesondere Türsprechanlage**

(30) Priorität: 12.08.1998 DE 19836419
(71) Anmelder: Ritto - Werk Loh GmbH & Co. KG, 35708 Haiger (DE)
(72) Erfinder: Achenbach, Heinz, 35236 Breidenbach (DE)
(74) Vertreter: Fleck, Hermann-Josef, Dr.-Ing.

(57) **Zusammenfassung**

Die Erfindung betrifft eine Türanlage, insbesondere Türsprechanlage, mit einem Gehäuse mit einem Aufnahmeraum für andere Funktionseinheiten, die mit Rastelementen versehen und mittels darauf abgestimmter Gegenelementen in das Gehäuse oder in einen in das Gehäuse einsetzbaren Aufnahmerahmen einrastbar oder einsetzbar sind, wobei das Gehäuse oder der Aufnahmerahmen nach dem Einbringen der Funktionseinheiten mit einem getrennten Verschlußteil verschließbar ist. Eine universelle Diebstahl-Sicherung der Funktionseinheiten im Gehäuse wird nach der Erfindung dadurch erreicht, dass bei angebrachtem Verschlußteil und eingeschalteter Versorgungsspannung für die Funktionseinheiten ein elektrisches Verriegelungselement (30) betätigt ist, das ein Lösen und Abnehmen des Verschlußteils vom Gehäuse oder Aufnahmerahmen nur bei abgeschalteter Versorgungsspannung freigibt.

## Beschreibung

Die Erfindung betrifft eine Türanlage, insbesondere Türsprechanlage, mit einem Gehäuse mit einem Aufnahmeraum für andere Funktionseinheiten, die mit Rastelementen versehen und mittels darauf abgestimmter Gegenelementen in das Gehäuse oder in einen in das Gehäuse einsetzbaren Aufnahmerahmen einrastbar oder einsetzbar sind, wobei das Gehäuse oder der Aufnahmerahmen nach dem Einbringen der Funktionseinheiten mit einem getrennten Verschlußteil verschließbar ist.

Eine Türanlage dieser Art ist aus der DE 40 19 837 C2 bekannt. Dabei können das Verschlußteil leicht vom Gehäuse oder Aufnahmerahmen gelöst und die Funktionseinheiten entnommen werden. Die Funktionseinheiten sind bei dieser bekannten Türanlage nicht ausreichend gegen Diebstahl geschützt.

Es ist auch schon bekannt, das lösbare Verschlußteil mittels schlüsselbetätigbarem Zylinderschloß am Gehäuse zu verriegeln. Der Zugang zu den Funktionseinheiten wird im Wartungsfall nur dem Besitzer des zugehörigen Schlüssels ermöglicht. Aus Sicherheitsgründen sind den verschiedenen Türanlagen unterschiedlich codierte Schlüssel zugeordnet, was die Verriegelung der abnehmbaren Verschlußteile erheblich kompliziert.

Es ist Aufgabe der Erfindung, eine Türanlage der eingangs erwähnten Art mit einer einfachen Verriegelung des getrennten Verschlußteils am Gehäuse oder am Aufnahmerahmen auszugestalten, die für alle Türanlagen identisch gewählt und im Wartungsfall leicht entriegelt werden kann.

Diese Aufgabe wid nach der Erfindung dadurch gelöst, dass bei angebrachtem Verschlußteil und eingeschalteter Versorgungsspannung für die Funktionseinheiten ein elektrisches Verriegelungselement betätigt ist, das ein Lösen und Abnehmen des Verschlußteils vom Gehäuse oder Aufnahmerahmen nur bei abgeschalteter Versorgungsspannung freigibt.

Nach dem Einbau der Funktionseinheiten und Anbringen des getrennten Verschlußteils am Gehäuse oder Aufnahmerahmen wird allein durch das Anschalten der Versorgungsspannung die Verriegelung vorgenommen. Im Wartungsfall braucht nur die Versorgungsspannung abgeschaltet zu werden, um das Verschlußteil vom Gehäuse oder Aufnahmerahmen zu lösen und die Funktionseinheiten herausnehmen zu können.

Eine einfache konstruktive Lösung ist dadurch gekennzeichnet, dass das Verschlußteil als Seitenteil des Gehäuses aus einem Unterteil und einem Oberteil besteht, dass das Unterteil mit dem Gehäuse oder Aufnahmerahmen verschraubbar ist und das elektrische Verriegelungselement aufnimmt, dass das Oberteil auf das Unterteil aufrastbar ist und die Schraubverbindungen des Unterteils und das Verriegelungselement abdeckt, und dass das Verriegelungselement einen Verriegelungsbolzen aufweist, der bei eingeschalteter Versorgungsspannung in eine Aufnahmebohrung einer Verriegelungslasche des mit dem Unterteil verrasteten Oberteils eingeführt ist.

Das Unterteil mit dem Verriegelungselement kann das Gehäuse oder den Aufnahmeraum mit den eingebrachten Funktionseinheiten verschließen. Dabei genügen einfache Schraubverbindungen zwischen Verschlußteil und Gehäuse oder Aufnahmerahmen, die mit dem aufrastbaren Oberteil genauso abgedeckt werden wie das im Unterteil untergebrachte Verriegelungselement.

Eine eindeutige Führung des verstellbaren Verriegelungsbolzens wird nach einer Ausgestaltung dadurch erreicht, dass die Verriegelungslasche zwischen zwei Führungslaschen des Unterteils eingebracht ist, die wie die Verriegelungslasche des Oberteils mit Aufnahmebohrungen für den Verriegelungsbolzen des Verriegelungselementes versehen sind.

Zur Teilreduzierung ist dabei vorgesehen, dass die Führungslaschen am Unterteil und die Verriegelungslasche am Oberteil einstückig angeformt sind.

Ist die Ausgestaltung so vorgenommen, dass die Aufnahmebohrung der Verriegelungslasche des Oberteils und die Aufnahmebohrungen der Führungslaschen des Unterteils in der verrasteten Stellung von Unterteil und Oberteil miteinander fluchten und auf die Längsachse des Verriegelungsbolzens des Verriegelungselementes ausgerichtet sind, dann ist der Verriegelungsbolzen sowohl in der Verals auch Entriegelungsstellung eindeutig geführt.

Das Verriegelungselement ist als Elektromagnet ausgebildet, der den Verriegelungsbolzen als Magnetkern verstellt.

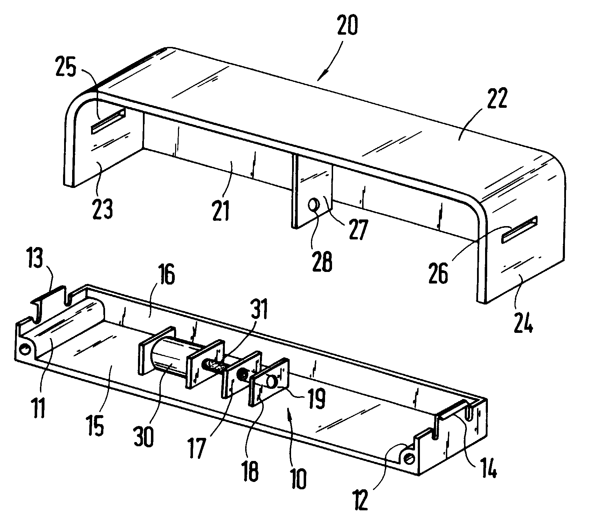

Die Erfindung wird anhand eines in der Zeichnung dargestellten Ausführungsbeispiels näher erläutert.

Ist das Gehäuse boxartig ausgebildet und mit einer offenen Seite versehen, dann können die mit Rastelementen oder ähnlichen Verbindungselementen versehenen Funktionseinheiten über die offene Seite des Gehäuses eingeschoben und durch die im Aufnahmeraum angebrachten Gegenelementen senkrecht zur Einschubrichtung darin gehalten werden. Sind alle Funktionseinheiten in das Gehäuse eingebracht, untereinander verdrahtet und mit dem Anschlußkabel verbunden, dann wird die offene Seite mit einem Verschlußteil verschlossen, wie es in der Zeichnung dargestellt ist.

Zunächst wird das Unterteil 10 des Verschlußteils mit dem Gehäuse verschraubt, wobei die Befestigungsschrauben in angeformte Schraubaufnahmen 11 und 12 eingeführt werden. Dabei liegen die Schraubenköpfe der Befestigungsschrauben in der Abschlußwand 16 des Unterteils 10 unverschiebbar fest. Das Unterteil 10 nimmt das Verriegelungselement 30 auf, das als Elektromagnet mit einem Verriegelungsbolzen 31 als Magnetkern ausgebildet ist. Der Verriegelungsbolzen 31 ist in beabstandeten Führungslaschen 17 und 18 des Unterteils 10 geführt, wie die die Längsachse des Verriegelungsbolzens 31 ausgerichteten Aufnahmebohrungen 19 der Führungslaschen 17 und 18 zeigen. Diese Führungslaschen 17 und 18 sind wie die Halter für das Verriegelungselement 30 einstückig am Unterteil 10 angeformt. Das Unterteil 10 ist an den einander gegenüberliegenden Seitenteilen mit Rastelementen 13 und 14 versehen, so daß das Oberteil 20 auf das Unterteil 10 aufgerastet werden kann. Die Seitenteile 23 und 24 des Oberteils 20 sind mit Rastaufnahmen 25 und 26 für die Rastelemente 13 und 14 des Unterteils 10 versehen. Die Abschlußwand 21 des Oberteils 20 deckt die Abschlußwand 16 des Unterteils 10 mit den Schraubverbindungen ab, während die Deckwand 22 und die Seitenteile 23 und 24 mit den Rastaufnahmen 25 und 26 das Unterteil 10 mit dem Verriegelungselement 30 abdecken und das Gehäuse vervollständigen.

An der Deckwand 22 ist eine Verriegelungslasche 27 mit Aufnahmebohrung 28 einstückig angeformt, die bei auf das Unterteil 10 aufgerastetem Oberteil 20 zwischen die Führungslaschen 17 und 18 des Unterteils 10 eingeführt ist. Dabei ist die Aufnahmebohrung 28 der Verriegelungslasche 27 auf die Aufnahmebohrungen 19 der Führungstaschen 17 und 18 des Unterteils 10 ausgerichtet. Wird dadurch die Versorgungsspannung an die Türanlage angeschaltet, dann wird das Verriegelungselement 30 erregt, wobei der Verriegelungsbolzen 31 in die Aufnahmebohrung 28 der Verriegelungslasche 27 eingeführt wird. Das Oberteil 20 mit dem Unterteil 10 ist dann solange unlösbar mit dem Gehäuse verbunden, solange die Versorgungsspannung an der Türanlage angeschaltet ist. Die Funktionseinheiten sind damit im Gehäuse gegen Diebstahl gesichert gehalten.

Soll eine oder mehrere Funktionseinheit(en) ausgetauscht werden, dann wird die Versorgungsspannung der Türanlage abgeschaltet. Das Verriegelungselement 30 zieht den Verriegelungsbolzen 31 zurück, so daß er aus der Aufnahmebohrung 28 der Verriegelungslasche 27 herausgeführt ist. Nach dem Lösen der Rastverbindungen 13, 25 und 14, 26 kann das Oberteil 20 von dem Unterteil 10 abgenommen werden. Die Schraubverbindungen zwischen Unterteil 10 und Gehäuse werden gelöst und das Unterteil 10 vom Gehäuse entfernt. Die Seite des Gehäuses ist offen, so dass die Funktionseinheiten an dieser offenen Seite aus dem Gehäuse herausgenommen werden können.

Die Ausbildung des Verriegelungselementes und des Verschlußteils kann auch mit anderen Mitteln vorgenommen werden. Wichtig ist, dass das Verriegelungselement bei angeschalteter Versorgungsspannung die Verriegelung des Verschlußteils am Gehäuse oder an einem in das Gehäuse einsetzbaren Aufnahmerahmen für die Funktionseinheiten vornimmt und erst bei Abschaltung der Versorgungsspannung wieder freigibt.

## Patentansprüche

1. Türanlage, insbesondere Türsprechanlage, mit einem Gehäuse mit einem Aufnahmeraum für andere Funktionseinheiten, die mit Rastelementen versehen und mittels darauf abgestimmter Gegenelementen in das Gehäuse oder in einen in das Gehäuse einsetzbaren Aufnahmerahmen einrastbar oder einsetzbar sind, wobei das Gehäuse oder der Aufnahmerahmen nach dem Einbringen der Funktionseinheiten mit einem getrennten Verschlußteil verschließbar ist,
dadurch gekennzeichnet,
dass bei angebrachtem Verschlußteil und eingeschalteter Versorgungsspannung für die Funktionseinheiten ein elektrisches Verriegelungselement (30) betätigt ist, das ein Lösen und Abnehmen des Verschlußteils vom Gehäuse oder Aufnahmerahmen nur bei abgeschalteter Versorgungsspannung freigibt.

2. Türanlage nach Anspruch 1,
dadurch gekennzeichnet,
dass das Verschlußteil als Seitenteil des Gehäuses aus einem Unterteil (10) und einem Oberteil (20) besteht,
dass das Unterteil (10) mit dem Gehäuse oder Aufnahmerahmen verschraubbar (11, 12) ist und das elektrische Verriegelungselement (30) aufnimmt,
dass das Oberteil (20) auf das Unterteil (10) aufrastbar ist und die Schraubverbindungen des Unterteils (10) und das Verriegelungselement (30) abdeckt, und
dass das Verriegelungselement (30) einen Verriegelungsbolzen (31) aufweist, der bei eingeschalteter Versorgungsspannung in eine Aufnahmebohrung (28) einer Verriegelungslasche (27) des mit dem Unterteil (10) verrasteten Oberteils (20) eingeführt ist.

3. Türanlage nach Anspruch 1 oder 2,
dadurch gekennzeichnet,
dass die Verriegelungslasche (27) zwischen zwei Führungslaschen (17, 18) des Unterteils (10) eingebracht ist, die wie die Verriegelungslasche (27) des Oberteils (20) mit Aufnahmebohrungen (19) für den Verriegelungsbolzen (31) des Verriegelungselementes (30) versehen sind.

4. Türanlage nach Anspruch 3,
dadurch gekennzeichnet,
dass die Führungslaschen (17, 18) am Unterteil (10) und die Verriegelungslasche (27) am Oberteil (20) einstückig angeformt sind.

5. Türanlage nach Anspruch 3 oder 4,
dadurch gekennzeichnet,
dass die Aufnahmebohrung (28) der Verriegelungslasche (27) des Oberteils (20) und die Aufnahmebohrungen (19) der Führungslaschen (17, 18) des Unterteils (10) in der verrasteten Stellung von Unterteil (10) und Oberteil (20) miteinander fluchten und auf die Längsachse des Verriegelungsbolzens (31) des Verriegelungselementes (30) ausgerichtet sind.

6. Türanlage nach einem der Ansprüche 1 bis 5,
dadurch gekennzeichnet,
daß das Verriegelungselement (30) als Elektromagnet ausgebildet ist, der den Verriegelungsbolzen (31) als Magnetkern verstellt.
